**Europäisches Patentamt**

**European Patent Office**

**Office européen des brevets**

(19)

(11) Numéro de publication : **0 387 146 B1**

## (12) FASCICULE DE BREVET EUROPEEN

(45) Date de publication du fascicule du brevet :
**10.05.95 Bulletin 95/19**

(51) Int. Cl.⁶ : $G06F\ 15/80$, G06G 7/60

(21) Numéro de dépôt : **90400612.9**

(22) Date de dépôt : **06.03.90**

(54) **Réseau neuronal analogique programmable.**

(30) Priorité : **10.03.89 FR 8903151**

(43) Date de publication de la demande :
**12.09.90 Bulletin 90/37**

(45) Mention de la délivrance du brevet :
**10.05.95 Bulletin 95/19**

(84) Etats contractants désignés :
**DE FR GB IT**

(56) Documents cités :
**US-A- 3 516 005**
**COMPUTER, vol. 21, no. 3, mars 1988, pages**
**25-39, IEEE, New York, US; B. WIDROWet al.:**
**"Neural nets for adaptive filtering and adap-**
**tive pattern recognition"**
**PROCEEDINGS OF THE IEEE INTERNATIO-**
**NAL CONFERENCE ON NEURAL NETWORKS,**
**San Diego, CA, 24-27 juillet 1988, pages**
**283-290, IEEE, New York, US; Y.-P. SIMON**
**FOO et al.: "Stochastic neural networks for**
**solving job-shop scheduling: Part 2. Architec-**
**ture and simulations"**

(56) Documents cités :
**PROCEEDINGS OF THE FIRST INTERNATIO-**
**NAL CONFERENCE ON COMPUTER TECHNO-**
**LOGY, SYSTEMS AND APPLICATIONS, VLSI**
**AND COMPUTERS, Hamburg, 11-15 mai 1987,**
**pages 31-34, IEEE, New York, US; U.**
**RUECKERT et al.: "A VLSI concept for an**
**adaptive associate matrix based on neural**
**networks"**
**PROCEEDINGS OF THE NEURAL NETWORKS**
**FROM MODELS TO APPLICATIONS, Paris, 6-9**
**juin 1988, pages 725-732, I.D.S.E.T., Paris, FR;**
**H.P. GRAF et al.: "VLSI neural network for fast**
**pattern matching"**

(73) Titulaire : **THOMSON-CSF**
**173, Boulevard Haussmann**
**F-75008 Paris (FR)**

(72) Inventeur : **De Chambosi, Emmanuel**
**Thomson-CSF,**
**SCPI**
**Cédex 67, F-92045 Paris La Défense (FR)**
Inventeur : **Vallet, François**
**Thomson-CSF,**
**SCPI**
**Cédex 67, F-92045 Paris La Défense (FR)**

(74) Mandataire : **Chaverneff, Vladimir et al**
**THOMSON-CSF**
**SCPI**
**B.P. 329**
**50, rue Jean-Pierre Timbaud**
**F-92402 Courbevoie Cédex (FR)**

## Description

La présente invention concerne un réseau neuronal analogique programmable.

Les réseaux neuronaux désignent, dans les techniques développées dans le domaine de l'intelligence artificielle, des circuits électriques capables de réaliser des transformations sur des vecteurs ayant un nombre élevé de composantes. De nombreux exemples de réalisation de ces circuits sont connus : citons, par exemple, la description du principe dans l'article de J.J. Hopfield et D.W. Tank intitulé "Neural computation of decision in optimization problems", publié dans la revue Biological Cybernetics 52, pp 141 à 152 (1985) ou encore l'article de H. Graf et P. de Vegvar "a CMOS Associative memory chip based on Neural Networks" publiés dans les proceedings de l'ISCC 1987.

L'objet de ces réseaux est de réaliser des opérations de la forme :

$$[V_s] = 1.[A_{ij}] [V_e]$$

où $[V_e]$ est un vecteur d'entrée à N composantes $V_{ei}$ telles que $V_{ei} \in \{-1+1\}$, $[V_s]$ est un vecteur de sortie à M composantes $V_{sj}$ telles que $V_{sj} \in \{-1,+1\}$ et où $[A_{ij}]$ est une matrice de N x M coefficients positifs ou négatifs $a_{ij}$.

$[A_{ij}]$ désigne l'opération qui à un vecteur d'entrée $[V_e]$ fait correspondre un vecteur de sortie $[V_s]$ tel que :

$$V_{sj} = sign \left( \sum_{i=1}^{N} a_{ij} * V_{ei} \right),$$

c'est-à-dire un produit scalaire de deux vecteurs, avec la convention que

$$sign (x) = 1 \text{ si } x > 0$$
$$sign (x) = -1 \text{ si } x < 0$$

Les coefficients $a_{ij}$ sont appelés "coefficients synaptiques" ou "poids synaptiques".

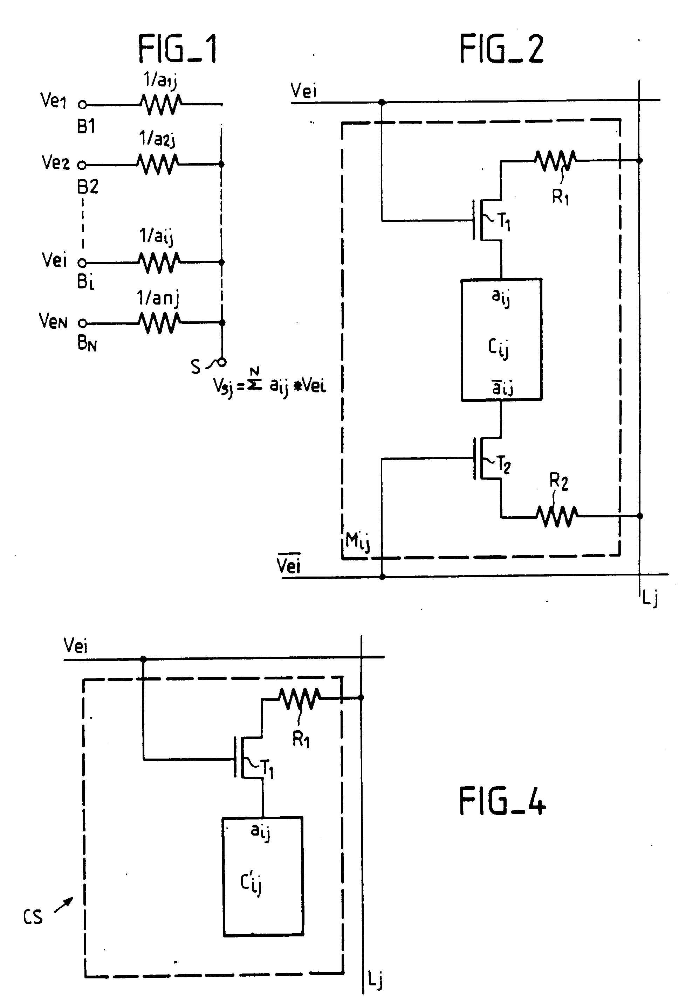

Il est connu depuis longtemps l'intérêt qu'il y aurait à effectuer l'opération $a_{ij} * V_{ei}$ de façon analogique selon le schéma du circuit de la figure 1. Dans le circuit de la figure 1, n bornes d'entrée B1 à Bn sont reliées à une sortie commune $S_j$ chacune via une résistance de valeur 1/apj avec p valant respectivement 1 à n. Les signaux d'entrée sur les bornes B1 à Bn sont respectivement $V_{e1}$ à $V_{en}$. A la sortie S on recueille

$$V_{sj} = \sum_{i=1}^{N} A_{ij} * V_{ei}.$$

Les résistances dessinées sur cette figure comme sur les suivantes ne représentent pas forcément une résistance linéaire mais toutes sortes de charges utilisées en microélectronique, notamment en technologies CMOS, des transistors dont la grille est reliée à la source ou au drain. Il est à noter que si le point commun est chargé sur impédance infinie, l'addition est réalisée en tension alors que si le point commun est chargé sur impédance nulle, l'addition est réalisée en courant.

Dans la mesure où l'on ne retiendra qu'une partie grossière de l'information, -1 ou +1, il n'est pas nécessaire d'avoir une très grande précision, mais par contre, l'avantage en rapidité découlant de la structure de la figure 1 est intéressant : la caractéristique de la sommation analogique est qu'elle permet d'additionner tous les termes de la somme en parallèle et non pas séquentiellement comme dans les dispositifs numériques.

Par ailleurs, il a été montré par E. de Chambost, dans une communication à n EURO'88, "Linear classification with binary connection networks", à Paris en Juin 1988 que les réseaux neuronaux conservaient l'essentiel de leurs propriétés si la résolution de chaque coefficient synaptique était réduite à un seul bit d'information, c'est-à-dire si 2 seules valeurs étaient autorisées à $a_{ij}$ : -1 ou +1.

Les figures 2,3,4,5,6 décrites ci-dessous, concernent ce cas particulier particulièrement intéressant pour la réalisation de réseaux neuronaux analogiques programmables : une seule cellule binaire est affectée à un coefficient $a_{ij}$.

Dans la suite de la description, on part de l'hypothèse que les opérations d'écriture de nouveaux tableaux de coefficients $a_{ij}$ sont beaucoup moins fréquentes que les opérations de chargement d'un nouveau vecteur d'entrée $[V_e]$.

La solution qui consisterait à réaliser physiquement les résistances de la figure 1 sur un circuit microélectronique n'est pas intéressante car elle conduirait à modifier les masques utilisés dans le processus technologique chaque fois que l'on veut modifier la valeur des coefficients synaptiques, ce qui représente une solution trop coûteuse.

On appelle Réseau Neuronaux analogiques programmables les réseaux neuronaux analogiques dont les coefficients synaptiques peuvent être modifiés électriquement, de la même façon que l'on peut écrire un mot binaire dans une mémoire électronique.

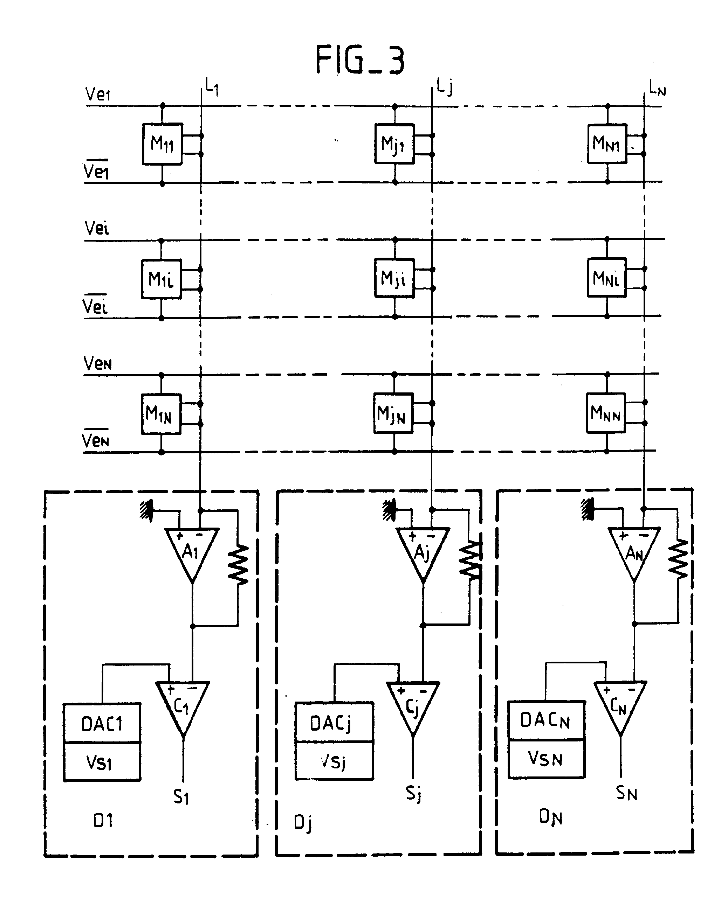

La solution classique pour réaliser des réseaux neuronaux analogiques programmables est celle représentée schématiquement figures 2 et 3.

Sur la figure 2, le rectangle en traits interrompus, référencé $M_{ij}$, délimite une connexion synaptique selon l'état de l'art. $C_{ij}$ est une cellule-mémoire réalisée selon des technologies connues. La cellule $C_{ij}$ délivre sur une première sortie un état logique $a_{ij}$, et sur une seconde sortie son complément $\overline{a_{ij}}$. Ces sorties sont reliées chacune à un conducteur de colonne Lj via un transistor FET ($T_1$, $T_2$ respectivement) en série avec une résistance ($R_1$, $R_2$ respectivement). La grille de $T_1$, $T_2$ est respectivement reliée à une ligne $V_{ei}$ et à une ligne $\overline{V_{ei}}$ à état logique complémentaire de celui de $V_{ei}$.

Sur la figure 3, on a représenté une partie de matrice de connexions synaptiques telles que celles de la figure 2. Cette matrice comporte des lignes $V_{ei}$ à $V_{en}$ et des lignes $\overline{V_{ei}}$ à $\overline{V_{en}}$ à états logiques respectivement complémentaires, et des colonnes $L_1$ à $L_n$. A chaque synapse (intersection d'une colonne avec deux lignes complémentaires telles que $V_{ek}$ et $\overline{V_{ek}}$) on dispose une connexion synaptique telle que celle de la figure 2. Chaque colonne $L_1$ à $L_n$ est reliée par un amplificateur opérationnel $A_1$ à $A_N$ à une entrée d'un dispositif comparateur $C_1$ à $C_N$ dont l'autre entrée reçoit une tension numérique de décalage $V_{s1}$ à $V_{sn}$, mémorisée sous forme d'un mot binaire, via un convertisseur numérique-analogique $DAC_1$ à $DAC_n$. L'ensemble $D_1$ à $D_n$ de ces éléments reliés à chaque colonne constitue un dispositif de détection, réalisant une addition en courant des signaux des N signaux d'entrée de la colonne correspondante.

"O" et "1" désignent les 2 états que l'on trouve sur des circuits électriques en logique binaire, $I_{ij}$ étant le courant résultant de la connexion élémentaire de la figure 2, proportionnel à $a_{ij} * V_{ei}$, la table de vérité du courant $I_{ij}$ est la suivante :

| $a_{ij}$ \ $V_{ej}$ | 0 | 1 |
|---|---|---|
| 0 | 1 | 0 |
| 1 | 0 | 1 |

Cette table de vérité est isomorphe à celle de la multiplication dans {-1, +1}

| | -1 | 1 |
|---|---|---|
| -1 | 1 | -1 |
| 1 | -1 | 1 |

Comme il est souvent requis pour un réseau de neurones de décaler la somme $\Sigma a_{ij} * V_{ei}$ d'un seuil VS associé à un jeu de coefficients ($a_{1j}$, ...$a_{ij}$,... $a_{nj}$), la structure complète d'un réseau analogique programmable est celle représentée figure 3. Ce décalage est réalisé dans les comparateurs $C_1$ à $C_N$ grâce aux tensions $V_{s1}$ à $V_{sn}$.

La nécessité de dédoubler les lignes $V_{ei}$ ainsi qu'il est montré sur la figure 3 provient du fait qu'une seule ligne permettrait de réaliser une opération isomorphe à la multiplication dans l'espace {0,1} et non pas dans l'espace {-1,1}.

La présente invention a pour objet un réseau neuronal analogique programmable permettant d'implémenter la table de vérité d'une multiplication dans l'espace {-1,1} en utilisant moins de composants que dans les circuits connus précités.

Le réseau neuronal analogique programmable, du type en matrice cartésienne à **N** entrées et **M** sorties, est caractérisé par le fait qu'il comporte un premier circuit de sommation relié aux **N** entrées, **N** lignes à et **M** colonnes, **N∗M** synapses qui résultent de l'intersection d'une ligne avec une colonne étant constitués chacun par une porte logique ($P_{ij}$) réalisant une opération isomorphe au produit scalaire

$$\text{sign}\left(\sum_{i=1}^{N} a_{ij} * Vei\right),$$

Vei étant les composantes d'un vecteur d'entrée ([Ve]) et les coefficients $a_{ij}$ correspondant aux "coefficients synaptiques" ou

$$a_{ij} \in \{-1, +1\} \text{ et } Vei \in \{-1, +1\}, \text{ et où on pose}$$
$$a_{ij} = 2 * a'_{ij} - 1 \text{ et } Vei = 2 * V'ei - 1,$$

ce qui donne la relation

$$\sum_{i=1}^{N} a_{ij} * Vei = \sum_{i=1}^{N} \left(2 * a'_{ij} - 1\right) * \left(2 * V'ei - 1\right) =$$

$$= 4 \underbrace{\sum_{i=1}^{N} a_{ij} * V'ei}_{A} - 2 \underbrace{\sum_{i=1}^{N} V'ei}_{B} - 2 \underbrace{\sum_{i=1}^{N} a'_{ij}}_{C} + 1 \qquad (1)$$

où

$$a'_{ij} \in \{0,1\} \text{ et } V'ei \in \{0,1\}$$

où le terme A de la relation (1) est implémenté à l'aide desdites portes logiques, ledit premier circuit de sommation implémentant le terme B de la relation (1), les M colonnes étant reliées chacune à un circuit de sommation de colonne, effectuant le terme C de la relation (1) une autre entrée de chacun de ces circuits de sommation de colonne étant reliée à la sortie dudit premier circuit de sommation et encore une autre entrée de chacun de ces circuits de sommation de colonne étant reliée à un circuit de production de tension réglable comportant un convertisseur numérique-analogique recevant un mot binaire, le mot binaire étant modifiable par programme.

La présente invention sera mieux comprise à la lecture de la description détaillée d'un mode de réalisation, illustrée par le dessin annexé, sur lequel :
- la figure 1 est un schéma d'un circuit connu réalisant une addition analogique,
- la figure 2 est un schéma général d'une connexion synaptique selon l'état de l'art ;
- la figure 3 est un schéma simplifié d'une matrice à connexions synaptiques, selon l'état de l'art ;
- la figure 4 est un schéma d'une connexion synaptique selon la présente invention ;
- la figure 5 est un schéma simplifié d'un réseau neuronal analogique programmable conforme à l'invention ;
- la figure 6 est un schéma d'une connexion synaptique en technologie EEPROM selon l'état de l'art, et
- la figure 7 est un schéma d'une connexion synaptique en technologie EEPROM conforme à l'invention.
Les figures 1 à 3 ont déjà été décrites ci-dessus.

Dans toute la présente description on mentionne des matrices à lignes d'entrée et colonnes de sortie, mais il est bien entendu que l'on pourrait permuter les rôles des lignes et des colonnes, ces appellations n'étant usitées que pour la commodité des explications.

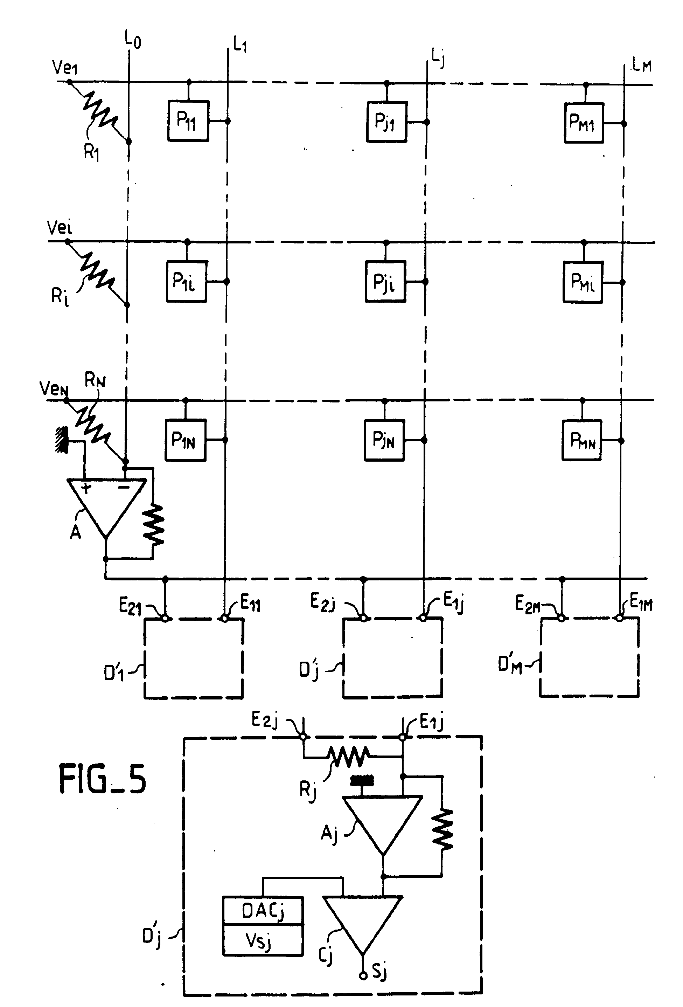

Sur le schéma de la figure 4, on a représenté une seule connexion synaptique CS faisant partie d'une matrice dont on a uniquement représenté une partie d'un conducteur de ligne d'entrée $V_{ei}$ et une partie d'un conducteur de colonne $L_j$.

La connexion CS comporte une cellule mémoire $C'_{ij}$ constituée par exemple par une porte logique de type "OU" ou "ET" dont la borne $a_{ij}$ est reliée par le trajet source-drain d'un transistor FET T1 en série avec une résistance R1 au conducteur $L_j$, la grille de T1 étant reliée au conducteur $V_{ei}$. On a donc fait l'économie d'un transistor avec sa résistance de drain et d'un conducteur de ligne ($\overline{V_{ei}}$).

La connexion CS permet d'implémenter la table de vérité d'une multiplication pour les raisons suivantes :
Une connexion synaptique est chargée de réaliser physiquement la fonction :

$$\text{sign } \left( \sum_{i=1}^{N} a_{ij} * V_{ei} \right)$$

expression dans laquelle

$$a_{ij} \in \{-1, +1\}$$

$$\text{et } V_{ei} \in \{-1, +1\}$$

On pose :

$$a_{ij} = 2 * a'_{ij} - 1$$

et

$$V_{ei} = 2 * V'_{ei} - 1,$$

ce qui donne :

$$\sum_{i=1}^{N} a_{ij} * Vei = \sum_{i=1}^{N} \left( 2 * a'_{ij} - 1 \right) * \left( 2 * V'ei - 1 \right) =$$

$$(2) \qquad 4 \underbrace{\sum_{i=1}^{N} a'_{ij} * V'_{ei}}_{A} - \underbrace{2 \sum_{i=1}^{N} V'_{ei}}_{B} - \underbrace{2 \sum_{i=1}^{N} a'_{ij}}_{C} + 1$$

Les 3 termes A, B, C peuvent être implémentés à l'aide de portes logiques simplement du fait que :
$$a'_{ij} \in \{0,1\} \text{ et que } V'_{ei} \in \{0,1\}$$

Dans la relation (2), le terme A est un produit scalaire qui peut être implémenté à l'aide d'une série de simples portes logiques telle que celle représentée en figure 4. Le terme B dépend du vecteur d'entrée mais est identique pour toutes les colonnes. Il doit être calculé pour chaque vecteur d'entrée. Le terme C ne dépend pas du vecteur d'entrée, mais uniquement de la valeur des coefficients de la colonne correspondante.

La matrice, représentée de façon simplifiée en figure 5, permet de réaliser les diverses opérations de la relation (2) précitée. Cette matrice comprend N conducteurs de lignes $V_{e1}$ à $V_{en}$ et M conducteurs de colonnes $L_1$ à $L_M$. En pratique, dans la plupart des cas, on a M = N. A chaque intersection (ou synapse) de la matrice, on branche une porte logique, $P_{11}$ à $P_{MN}$ telle que la porte de la figure 4, qui réalise une opération isomorphe à un produit scalaire dès lors que $a'_{ij} \in \{0,1\}$ et $V'_{ei} \in \{0,1\}$. Un conducteur de colonne $L_o$ est relié à chaque ligne par une résistance, $R_1$ à $R_N$. Cette colonne $L_o$ est branchée à l'entrée inverseuse d'un amplificateur opérationnel A.

Chacune des autres colonnes $L_1$ à $L_M$ est reliée à une première entrée, $E_{11}$ à $E_{1M}$ d'un dispositif sommateur, $D'_1$ à $D'_M$. La sortie de l'amplificateur A est reliée simultanément à une deuxième entrée, $E_{21}$ à $E_{2M}$ de tous les dispositifs $D'_1$ à $D'_M$.

Tous les dispositifs $D'_1$ à $D'_M$ sont identiques. On a représenté en détail sur la figure 5 seulement le dispositif $D'_j$. Dans ce dispositif $D'_j$, la borne d'entrée $E_{1j}$ est directement reliée à l'entrée d'un amplificateur opérationnel $A_j$, et la borne $E_{2j}$ est reliée à cette même entrée de l'amplificateur via une résistance $R_j$. La sortie de l'amplificateur $A_j$ est reliée à une première entrée d'un comparateur $C_j$ dont une seconde entrée est reliée à la sortie d'un convertisseur numérique-analogique $DAC_j$ recevant un mot binaire $V_{sj}$.

Dans la matrice de la figuré 5, l'amplificateur A avec la colonne $L_o$ et les résistances $R_1$ à $R_N$ constituent un circuit implémentant le terme B de la relation (2) ci-dessus, c'est-à-dire effectuant la sommation des N signaux d'entrée. Le signal de sortie de ce circuit est envoyé en offset à chaque circuit $D'_1$ à $D'_N$ (via la borne $E_{21}$ à $E_{2N}$ respectivement).

Comme précisé ci-dessus, les différentes portes $P_{11}$ à $P_{MN}$ réalisent les opérations isomorphes à des produits scalaires (terme A de la relation (2)).

Le terme C de la relation (2), qui ne dépend que de la valeur des coefficients affectant les vecteurs d'entrée est déterminé pour chaque colonne dans les circuits $D'_1$ à $D'_M$, par la valeur $V_{S1}$ à $V_{SM}$ (sous forme de mot numérique, donc facile à modifier par programme, converti en valeur analogique par les convertisseurs $DAC_1$ à $DAC_M$). Cette valeur numérique convertie en valeur analogique est portée en offset sur le signal de chaque colonne dans les comparateurs $C_1$ à $C_M$.

Bien entendu, les coefficients 2 et 4 des termes A, B et C sont obtenus facilement dans les circuits $D'_1$ à $D'_M$ par réglage correspondant des résistances des amplificateurs opérationnels $A_1$ à $A_M$.

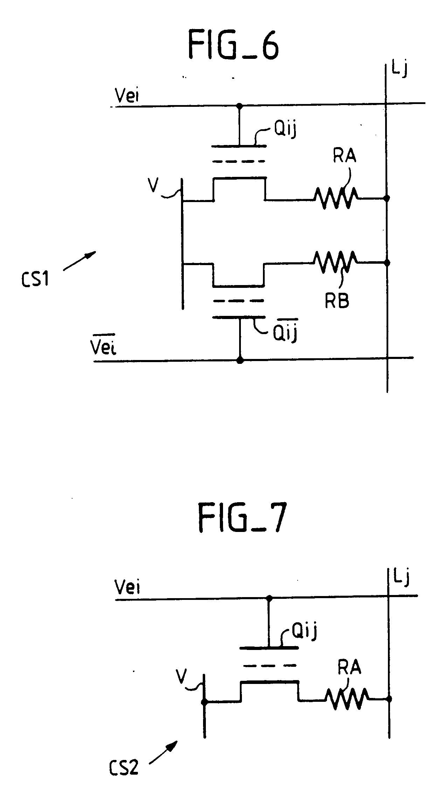

On a représenté en figure 6, le schéma d'une connexion synaptique CS1 en technologie EEPROM à grille flottante, selon l'état de l'art. La connexion CS1 comporte deux transistors $Q_{ij}$ et $\overline{Q_{ij}}$ dont les grilles de commande sont reliées respectivement aux lignes $V_{ei}$ et $\overline{V_{ei}}$, dont les drains sont reliés via une résistance, RA,RB respectivement à une colonne $L_j$ et dont les sources sont reliées à un potentiel de référence V.

Par contre, la connexion synaptique CS2 de la figure 7, conforme à l'invention, toujours en technologie EEPROM, ne nécessite qu'une seule ligne $V_{ei}$ et un seul transistor $Q_{ij}$ dont le drain est relié via la résistance RA à la colonne $L_j$ et dont la source est reliée au potentiel de référence V.

Bien que le dispositif de l'invention puisse être réalisé en diverses technologies telles que SRAM-CMOS, il est plus avantageux de le réaliser en technologie EEPROM à grille flottante, car dans ce dernier cas, chaque cellule de mémorisation ne comporte normalement pas de transistor stockant l'état complémentaire de celui stocké sous forme de charges dans la grille du transistor unique (c'est-à-dire pas d'état $\overline{a_{ij}}$, voir figure 2). On diminue donc de moitié l'espace occupé par une matrice, par rapport au cas à technologie CMOS.

Bien entendu pour réaliser les matrices de l'invention, il n'est pas possible d'utiliser de mémoires dynamiques car leur principe de rafraîchissement interdit toute lecture collective, nécessaire dans les réseaux neuronaux.

**Revendications**

1. Réseau neuronal analogique programmable, du type en matrice cartésienne à **N** entrées et **M** sorties, caractérisé par le fait qu'il comporte un premier circuit de sommation (A) relié aux **N** entrées, **N** lignes ($V_{e1}$ à $V_{en}$) et M colonnes $L_1$ à $L_M$), **N∗M** synapses qui résultent de l'intersection d'une ligne avec une colonne étant constitués chacun par une porte logique ($P_{ij}$) réalisant une opération isomorphe au produit scalaire

$$\text{sign}\left(\sum_{i=1}^{N} a_{ij} * Vei\right),$$

Vei étant les composantes d'un vecteur d'entrée ([Ve]) et les coefficients $a_{ij}$ correspondant aux "coefficients synaptiques" ou
$$a_{ij} \in \{-1, +1\}\ et\ Vei \in \{-1, +1\}, et\ où\ on\ pose$$
$$a_{ij} = 2 * a'_{ij} - 1\ et\ Vei = 2 * V'ei - 1,$$
ce qui donne la relation

$$\sum_{i=1}^{N} a_{ij} * Vei = \sum_{i=1}^{N} \left(2 * a'_{ij} - 1\right) * \left(2 * V'ei - 1\right) =$$

$$= 4\overbrace{\sum_{i=1}^{N} a_{ij} * V'ei}^{A} - 2\overbrace{\sum_{i=1}^{N} V'ei}^{B} - 2\overbrace{\sum_{i=1}^{N} a'_{ij}}^{C} + 1 \qquad (1)$$

où
$$a'_{ij} \in \{0,1\}\ et\ V'ei \in \{0, 1\}$$
où le terme A de la relation (1) est implémenté à l'aide desdites portes logiques ($P_{ij}$), ledit premier circuit de sommation (A) implémentant le terme B de la relation (1), les M colonnes étant reliées chacune à un circuit de sommation de colonne ($D'_1$ à $D'_M$), effectuant le terme C de la relation (1) une autre entrée de chacun de ces circuits de sommation de colonne étant reliée à la sortie dudit premier circuit de sommation et encore une autre entrée de chacun de ces circuits de sommation de colonne étant reliée à un circuit de production de tension réglable ($DAC_j$, $V_{sj}$) comportant un convertisseur numérique-analogique ($DAC_j$) recevant un mot binaire ($V_{sj}$), le mot binaire étant modifiable par programme.

**2.** Réseau neuronal selon la revendication 1, caractérisé par le fait que les synapses sont réalisés en technologie EEPROM à grille flottante.

**3.** Réseau neuronal selon l'une quelconque des revendications précédentes, caractérisé par le fait que les synapses sont réalisés en technologie SRAM-CMOS.

**Patentansprüche**

**1.** Analoges programmierbares neuronales Netz vom Typ mit kartesischer Matrix mit N Eingängen und M Ausgängen, gekennzeichnet durch eine erste Summierschaltung (A), die an die N Eingänge, N Zeilen ($V_{e1}$ bis $V_{en}$) und M Spalten ($L_1$ bis $L_M$) angeschlossen ist, N*M Synapsen, die sich aus der Überschneidung einer Linie mit einer Spalte ergeben und jeweils von einem logischen Tor (Pij) gebildet sind, das eine isomorphe Operation an dem skalaren Produkt

$$\operatorname{sign}\left(\sum_{i=1}^{N} aij * Vei\right)$$

bildet, wobei Vei die Komponenten eines Eingangsvektors ([Ve]) sind und die Koeffizienten $a_{ij}$ den "synaptischen Koeffizienten" oder
$$a_{ij} \in \{-1, +1\} \text{ und } Vei \in \{-1, +1\},$$
entsprechen, und wobei
$$a_{ij} = 2 * a'_{ij} - 1 \text{ und } Vei = 2 * V'ei - 1,$$
gesetzt wird, was die folgende Beziehung ergibt

$$\sum_{i=1}^{N} a_{ij} * Vei = \sum_{i=1}^{N} \left(2 * a'_{ij} - 1\right) * \left(2 * V'ei - 1\right) =$$

$$= 4 \overbrace{\sum_{i=1}^{N} a_{ij} * V'ei}^{A} - 2 \overbrace{\sum_{i=1}^{N} V'ei}^{B} - 2 \overbrace{\sum_{i=1}^{N} a'_{ij}}^{C} + 1 \qquad (1)$$

wobei gilt:
$$a'_{ij} \in \{0, 1\} \text{ und } V'ei \{0,1\}$$
wobei der Ausdruck A der Beziehung (1) mit Hilfe der logischen Tore ($P_{ij}$) implementiert wird, die erste Summierschaltung (A) den Ausdruck B der Beziehung (1) implementiert, die M Spalten jeweils an eine Spaltensummierschaltung ($D'_1$ bis $D'_M$) angeschlossen sind, die den Ausdruck C der Beziehung (1) implementiert, wobei ein weiterer Eingang jeder der Spaltensummierschaltungen am Ausgang der ersten Summierschaltung angeschlossen ist und außerdem ein weiterer Eingang jeder dieser Spaltensummierschaltungen an eine Schaltung zum Erzeugen einer einstellbaren Spannung ($DAC_j$, $V_{sj}$) angeschlossen ist, die einen Digital/Analog-Umsetzer ($DAC_j$) enthält, der ein Binärwort ($V_{sj}$) empfängt, wobei das Binärwort durch ein Programm modifizierbar ist.

**2.** Neuronales Netz nach Anspruch 1, dadurch gekennzeichnet, daß die Synapsen in der EEPROM-Technologie mit schwimmendem Gate realisiert sind.

**3.** Neuronales Netz nach einem der vorhergehenden Ansprüche, dadurch gekennzeichnet, daß die Synapsen in der SRAM-CMOS-Technologie realisiert sind.

**Claims**

**1.** Analogue programmable neural network, of the cartesian matrix type with N inputs and M outputs, characterized in that it includes a first summation circuit (A) connected to the N inputs, N rows ($V_{e1}$, to $V_{en}$) and M columns ($L_1$ to $L_M$), N∗M synapses which result from the intersection of a row with a column and each of which consists of a logic gate ($P_{ij}$) carrying out an operation isomorphic to the scalar product

$$\mathbf{sign} \left( \sum_{i=1}^{N} a_{ij} * Vei \right) \quad ,$$

Vei being the components of an input vector ([Ve]) and the coefficients ($a_{ij}$) corresponding to the "synaptic coefficients" or

$$a_{ij} \in \{- 1, + 1\} \text{ and } Vei \in \{- 1, + 1\}, \text{ and where we put}$$
$$a_{ij} = 2 * a'_{ij} - 1 \text{ and } Vei = 2 * V'ei - 1,$$

which yields the relation

$$\sum_{i=1}^{N} a_{ij} * Vei = \sum_{i=1}^{N} \left( 2 * a'_{ij} - 1 \right) * \left( 2 * V'ei - 1 \right) =$$

$$= 4 \underbrace{\sum_{i=1}^{N} a_{ij} * V'ei}_{A} - 2 \underbrace{\sum_{i=1}^{N} V'ei}_{B} - 2 \underbrace{\sum_{i=1}^{N} a'_{ij}}_{C} + 1 \qquad (1)$$

where

$$a'_{ij} \in \{0.1\} \text{ and } V'ei \in \{0.1\}$$

where the term A of the relation (1) is implemented with the aid of the said logic gates ($P_{ij}$), the said first summation circuit (A) implementing the term B of the relation (1), the M columns each being connected to a column summation circuit ($D'_1$ to $D'_M$), effecting the term C of the relation (1), another input of each of these column summation circuits being connected to the output of the said first summation circuit and yet another input of each of these column summation circuits being connected to an adjustable-voltage production circuit ($DAC_j$, $V_{sj}$) including a digital/analogue convertor ($DAC_j$) receiving a binary word ($V_{sj}$), the binary word being programme-modifiable.

2. Neural network according to Claim 1, characterized in that the synapses are embodied through floating-gate EEPROM technology.

3. Neural network according to any one of the preceding claims, characterized in that the synapses are embodied through SRAM-CMOS technology.

# FIG_1

$Ve_1$ ○——— $1/a_{1j}$ ———
$B1$

$Ve_2$ ○——— $1/a_{2j}$ ———
$B2$

$Ve_i$ ○——— $1/a_{ij}$ ———
$B_i$

$Ve_N$ ○——— $1/a_{nj}$ ———
$B_N$

$S$

$$Vs_j = \sum_{i}^{N} a_{ij} * Ve_i$$

# FIG_2

$Ve_i$

$R_1$

$T_1$

$a_{ij}$

$C_{ij}$

$\overline{a}_{ij}$

$T_2$

$R_2$

$M_{ij}$

$\overline{Ve_i}$

$L_j$

# FIG_4

$Ve_i$

$R_1$

$T_1$

$a_{ij}$

$C'_{ij}$

$CS$

$L_j$

# FIG_3

FIG_5

## FIG_6

## FIG_7